# EUROPÄISCHE PATENTANMELDUNG

(11) **EP 4 759 208 A1**
(43) Veröffentlichungstag der Anmeldung: **17.06.2026**
(21) Anmeldenummer: 25223814.2
(22) Anmeldetag: 16.12.2025
(51) Int. Cl.: A47J 36/02, A47J 36/16

(54) **KOCHGESCHIRR FÜR EIN INDUKTIONSKOCHFELD UND SET ZUR UMRÜSTUNG EINES SCHÜSSELKÖRPERS ZU EINEM ENTSPRECHENDEN KOCHGESCHIRR FÜR EIN INDUKTIONSKOCHFELD**

(30) Priorität: 16.12.2024 DE 102024138108
(71) Anmelder: Festa, Michele, 76185 Karlsruhe (DE)
(72) Erfinder: Festa, Michele, 76185 Karlsruhe (DE)
(74) Vertreter: Lichti - Patentanwälte Partnerschaft mbB

(57) **Zusammenfassung**

Ein Kochgeschirr für ein Induktionskochfeld besitzt einen napfartigen Schüsselkörper aus einem induktiv nicht erwärmbaren Material, der einen Boden und eine Seitenwand zur Begrenzung eines Garraums aufweist, und ein Einsatzteil aus einem induktiv erwärmbaren Material. Das Einsatzteil ist mit Abstand oberhalb des Bodens innerhalb des Garraums angeordnet, wobei zwischen dem Boden und dem Einsatzteil ein Aufnahmeraum zur Aufnahme einer Flüssigkeit gebildet ist. Das Einsatzteil ist mittels einer Befestigungseinrichtung so an dem Schüsselkörper gehalten, dass das Einsatzteil relativ zum Schüsselkörper (3) beweglich ist. Die Befestigungseinrichtung weist ein Führungsteil auf, das das Einsatzteil mit Spiel durchdringt und so ausgestaltet ist, dass eine Bewegung des Einsatzteils längs des Führungsteils ermöglicht ist. Ein Set zur Umrüstung eines Schüsselkörpers zu einem Kochgeschirr für ein Induktionskochfeld besitzt ein Einsatzteil aus einem induktiven erwärmbaren Material und eine Befestigungseinrichtung zur Anbringung des Einsatzteils am Schüsselkörper.

## Beschreibung

Die Erfindung betrifft ein Kochgeschirr für ein Induktionskochfeld mit einem napfartigen Schüsselkörper, der einen Boden und zumindest eine Seitenwand zur Begrenzung eines Garraums aufweist.

Ferner betrifft die Erfindung ein Set zur Umrüstung eines Schüsselkörpers aus einem induktiv nicht erwärmbaren Material zu einem entsprechenden Kochgeschirr für ein Induktionskochfeld.

Die vorliegende Erfindung gehört zum Bereich der Lebensmitteltechnologie, der angewandten Thermodynamik und der Einwegverpackung. Sie betrifft ein Induktions-Kochgeschirr, das für die direkte Zubereitung oder Erwärmung von Lebensmitteln in nichtmetallischen, einweg- oder wiederverwendbaren Behältern konzipiert ist, die aus umweltfreundlichen und recycelbaren Materialien wie Kraftpapier, Polypropylen (PP) und Zellulose-Derivaten bestehen.

Die Auswahl eines geeigneten Kochgeschirrs beeinflusst nicht nur die Qualität und die Geschwindigkeit eines Kochprozesses, sondern auch dessen Sicherheit und Benutzerfreundlichkeit. In diesem Zusammenhang bieten Induktionskochfelder Vorteile, da sie elektromagnetische Felder nutzen, um ferromagnetisches Kochgeschirr, wie Töpfe oder Pfannen zu erhitzen. Diese Methode zeichnet sich durch eine hohe Energieeffizienz aus, da die Wärme direkt im Kochgeschirr erzeugt wird, ohne dass die Umgebung erhitzt wird. Die direkte Erwärmung ermöglicht eine einfache Temperaturregelung, was besonders bei der Zubereitung empfindlicher Speisen vorteilhaft ist.

Eine Erwärmung beispielweise mittels Mikrowellen bietet hingegen zwar eine schnelle Möglichkeit zur Zubereitung von Speisen, jedoch sind dabei erhebliche Einschränkungen zu berücksichtigen. Die Erhitzung von Lebensmitteln mittels Mikrowellen erfolgt durch die Anregung von Wassermolekülen mittels elektromagnetischer Wellen, was zu einer ungleichmäßigen Erwärmung führen kann. Die äußeren Schichten der Speisen können schnell erhitzt werden, während das Innere oft noch kalt bleibt. Die ungleichmäßige Erwärmung kann folglich die Textur und die Qualität der Speisen negativ beeinflussen. Insbesondere die Zubereitung von Nudelgerichten mittels Mikrowellen ist nicht zu empfehlen, da Nudeln eine konstante, hohe Temperatur benötigen, um optimal zu garen.

Aus dem Stand der Technik ist ein Kochgeschirr bekannt, das aus einer Kombination von Metall und Kunststoff besteht. Häufig wird für den napfartigen Schüsselkörper Metall verwendet, da es eine gute Wärmeleitfähigkeit und Wärmespeicherung aufweist. Kunststoff hingegen wird in der Regel für Griffe und Deckel verwendet. Aufgrund dessen schlechter Wärmeleitfähigkeit bleiben diese Teile während des Kochprozesses in einem Induktionsfeld kühl, was die Handhabung erleichtert und das Verbrennungsrisiko verringert.

Aus der EP 4 042 909 A1 ist ein Küchenutensil zur Verwendung auf einem Induktionskochfeld bekannt, das auf das Induktionskochfeld aufstellbar ist und eine Innenschale mit einem Innenboden sowie eine von der Innenschale durch einen Zwischenraum abgesetzte Außenschale mit einem Außenboden aufweist. Zwischen dem Innenboden und dem Außenboden befindet sich eine induktive Heizvorrichtung, die eine wärmeleitende Verbindung zur Innenschale aufweist. Diese Heizvorrichtung umfasst eine Wärmeverteilschicht, die wärmeleitend mit dem Innenboden verbunden ist, sowie eine Wärmeerzeugungsschicht, die auf der gegenüberliegenden Seite der Wärmeverteilschicht angeordnet und vom Außenboden abgesetzt ist. In einer Aufstelllage des Küchenutensils auf dem Induktionskochfeld besteht die Möglichkeit, die Wärmeerzeugungsschicht direkt oder indirekt mit einer Induktionsspule des Kochfeldes induktiv zu koppeln.

Ein wesentlicher Nachteil der bisherigen Ausgestaltungen besteht darin, dass die Herstellung von induktionsgeeignetem Kochgeschirr mit hohen Kosten verbunden ist. Edelstahl, der häufig für induktionsfähiges Kochgeschirr verwendet wird, ist nicht nur teuer, sondern auch schwer. Dies resultiert in einer kostenintensiven Herstellung und einem wenig umweltfreundlichen Transport.

Des weiteren sind bekannte Kochgeschirre für ein Induktionsfeld aufgrund ihres Gewichtes und ihrer Kosten nicht zum einmaligen Gebrauch bei Fertigspeisen oder Halbfertigspeisen verwendbar.

Die derzeit verfügbaren Induktions-Kochsysteme sind ausschließlich für die Verwendung mit starren Oberflächen und metallischen Behältern vorgesehen. Bestehende Lösungen sehen keine Integration von Induktionsmodulen in Einwegverpackungen aus nichtmetallischen Materialien vor. Alternative Technologien wie Mikrowellenöfen weisen erhebliche Einschränkungen auf hinsichtlich einer gleichmäßigen Wärmeverteilung, der Kompatibilität mit nachhaltigen Materialien und der Lebensmittelsicherheit und Temperaturkontrolle auf.

Der Erfindung liegt die Aufgabe zugrunde, ein Kochgeschirr zum verbesserten Erwärmen und/oder Garen von Speisen auf einem Induktionskochfeld zu schaffen, das sich durch ein geringes Gewicht sowie eine kostengünstige Herstellung auszeichnet.

Darüber hinaus soll ein Set zum Umrüsten eines Schüsselkörpers zu einem Kochgeschirr für ein Induktionskochfeld geschaffen werden, das sich kostengünstig herstellen und einfach handhaben lässt.

Diese Aufgabe wird erfindungsgemäß hinsichtlich des Kochgeschirrs durch ein Kochgeschirr mit den Merkmalen des Anspruchs 1 gelöst.

Das Kochgeschirr für ein Induktionskochfeld besitzt einen napfartigen Schüsselkörper aus einem induktiv nicht erwärmbaren Material und weist einen Boden und eine Seitenwand zur Begrenzung eines Garraumes auf. Ferner ist ein Einsatzteil aus einem induktiv erwärmbaren Material vorgessehen, das mit einem Abstand a oberhalb des Bodens innerhalb des Garraums angeordnet ist. Der Abstand a des Einsatzteils von dem Boden kann im Bereich von 1 mm bis 20 mm und vorzugsweise im Bereich von 5 mm bis 15 mm liegen.

Zwischen dem Boden und dem Einsatzteil ist ein Aufnahmeraum zur Aufnahme einer Flüssigkeit, insbesondere Wasser gebildet. Das Einsatzteil ist mittels einer Befestigungseinrichtung so an dem Schüsselkörper gehalten, dass es relativ zum Schüsselkörper beweglich ist. Diese Ausgestaltung bringt den Vorteil mit sich, dass der Schüsselkörper teilweise oder vollständig aus Kunststoff, insbesondere Polypropylen und/oder aus Zellulose, insbesondere Kraftkarton und/oder aus einem nicht-ferromagnetischen Material bestehen kann. Auf diese Weise ist der Schüsselkörper relativ leicht und kann auch in kostengünstiger Weise hergestellt und bei Bedarf nach einmaligem Gebrauch entsorgt werden. In den Schüsselkörper wird die Flüssigkeit, insbesondere Wasser, und/oder eine vorbereitete, essfertige Speise eingefüllt.

Wenn der mit dem Wasser und/oder der vorbereiteten Speise zumindest teilweise befüllte Schüsselkörper in ein Induktionsfeld gebracht wird, erwärmt sich das Einsatzteil, das aus dem induktiv erwärmbaren Material besteht, wodurch sich auch das Wasser und/oder die vorbereitete, essfertige Speise erwärmt.

Wenn das Wasser und/oder die Speise erwärmt wird, bilden sich Blasen und Wellen. Diese bewirken, dass das am Schüsselkörper beweglich gehaltene Einsatzteil eine Bewegung relativ zum Schüsselkörper ausführt. Dabei kann es sich insbesondere um eine Schwenkbewegung und/oder eine Taumelbewegung handeln. Aufgrund der Bewegung des Einsatzteils werden auch die im Wasser befindlichen zu erwärmenden und/oder zu kochenden Lebensmittel, beispielsweise Nudeln, und/oder die Speise bewegt und durchmischt, wodurch erreicht wird, dass diese gleichmäßig erwärmt werden.

Das Kochgeschirr wird vorzugsweise mit einem Induktions-Heizelement verwendet, das für die direkte Zubereitung oder Erwärmung von Lebensmitteln in nichtmetallischen, einweg- oder wiederverwendbaren Behältern konzipiert ist, die aus umweltfreundlichen und recycelbaren Materialien wie Kraftpapier, Polypropylen (PP) und Zellulose-Derivaten bestehen.

Das Set (Modul) zur Nachrüstung eines bestehenden Behälters ist skalierbar und an Behälter unterschiedlicher Geometrie und Volumen anpassbar. Es kann in automatisierte Verpackungslinien oder tragbare gastronomische Systeme integriert werden. Die Architektur erlaubt das Entfernen und Ersetzen des Einsatzteils, wodurch Reinigung und Wiederverwendung erleichtert werden. Das System ist kompatibel mit Einzelportionsanwendungen und entspricht den Anforderungen des Marktes für schnelle und bewusste Gastronomie.

Die Erfindung adressiert das Problem der direkten Induktionszubereitung in nichtmetallischen Einwegbehältern und vermeidet strukturelle Verformungen des Behälters, Kontaminationen durch ungeeignete Materialien und Ineffizienzen bei der Wärmeübertragung

Das Modul ermöglicht eine indirekte, kontrollierte und gleichmäßige Erwärmung, die mit Materialien geringer thermischer Beständigkeit kompatibel ist. Dadurch lassen sich die Zubereitungszeiten verkürzen, ohne die gastronomische Qualität des Endprodukts zu beeinträchtigen.

Die vorgeschlagene Lösung besteht aus einem kompakten und effizienten Induktions-Heizelement, das am Boden von Einweg- oder Mehrwegbehältern installiert werden kann. Die Integration kann mechanisch oder durch Klebung erfolgen, vorzugsweise ohne strukturelle Änderungen am Behälter, der seine Form, Größe und Materialzusammensetzung beibehält.

Das System ermöglicht eine magnetische Induktion mit einem Energieübertragungsgrad von über 90%, wodurch der Behälter für die Zubereitung geeignet wird. Es handelt sich um eine flexible Lösung, die auf Einzelportionsbehälter beliebiger Geometrie und Materialität anwendbar ist. Die Verwendung standardisierter Behälter ist besonders vorteilhaft für den "Ready to Cook"-Prozess, dank der Eigenschaften einer hohen mechanischen Festigkeit, einer chemischen Kompatibilität und einer physiologischen Neutralität zusammen mit Materialnachhaltigkeit.

Die Erfindung unterstützt das "Ready to Cook"-Ernährungsmodell, das auf praktische und gesunde Lösungen für einen dynamischen Lebensstil ausgerichtet ist. Das Modul ermöglicht die schnelle Zubereitung (3-6 Minuten) frischer Gerichte direkt im Behälter und hebt präzise dosierte biologische Zutaten hervor - ganz ohne externe Eingriffe. Die Mahlzeit kann überall konsumiert werden: im Büro, zu Hause, unterwegs oder im Freien. Die Kombination aus aktiver Wärmeregulierung, schwimmender Verankerung und dynamischer Bewegung der Heizplatte bildet ein integriertes, sicheres und anpassungsfähiges System, das die Effizienz des Kochprozesses verbessert und neue Perspektiven im Bereich der Lebensmittelverpackung und modularen Gastronomie eröffnet.

Das Kochgeschirr kann aus zwei Hauptkomponenten bestehen, nämlich einer induktionsfähigen, schwimmend gelagerten Metallplatte, die als aktive Kochfläche dient, und einer mechanischen Halterung, die eine kontrollierte Positionierung und funktionale Beweglichkeit ermöglicht.

Die Interaktion dieser Elemente ermöglicht eine dynamische Kochfläche, die auf thermische und fluiddynamische Belastungen während des Erhitzungsprozesses reagiert. Das System ist ausgerichtet auf eine gleichmäßige Wärmeverteilung über die gesamte Plattenoberfläche und die Reduktion der Lebensmittelanhaftung durch Mikrobewegungen, die beim Sieden des Wassers entstehen, und auf den Erhalt der organoleptischen Eigenschaften der Lebensmittel, einschließlich Aroma, Saftigkeit und Konsistenz.

Der Schüsselkörper besteht aus einem induktiv nicht erwärmbaren Material und insbesondere aus Kunststoff oder wasserfestem Karton oder sogenannten Kraftpapier oder Zellulose.

Bevorzugte Ausgestaltungen des erfindungsgemäßen Kochgeschirrs werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Materialien, die induktiv erwärmbar sind, weisen eine ferromagnetische Eigenschaft auf, welche die Umwandlung elektromagnetischer Felder in Wärme ermöglicht. Materialien, die nicht induktiv erwärmt werden können, sind solche, die in einem elektromagnetischen Feld keine oder zumindest keine nennenswerte Erwärmung erfahren. Diese Materialien weisen keine ferromagnetischen Eigenschaften auf, so dass sie für die Induktionserwärmung nicht geeignet sind. Zu den typischen Beispielen zählen Kunststoffe, Glas, Keramik sowie bestimmte Edelstähle.

Die Erfindung betrifft ein Kochgeschirr für ein Induktionskochfeld, mit dem napfartigen Schüsselkörper aus einem induktiv nicht erwärmbaren Material mit dem Boden und der Seitenwand zur Begrenzung eines Garraumes. Zudem besitzt das Kochgeschirr das Einsatzteil aus einem induktiv erwärmbaren Material, wobei das Einsatzteil mit Abstand oberhalb des Bodens innerhalb des Garraumes angeordnet ist.

Vorzugsweise ist das Einsatzteil mittels der Befestigungseinrichtung mit dem Boden verbunden, wobei es sich parallel zum Boden des Schüsselkörpers und das Führungsteil sich senkrecht zum Boden des Schüsselkörpers erstrecken kann.

Insbesondere kann die Befestigungseinrichtung im Mittelpunkt des Bodens und/oder des Einsatzteils angeordnet sein.

In bevorzugter Ausgestaltung ist das Führungsteil als Bolzen insbesondere aus Metall oder Aluminium ausgestaltet.

Die Befestigungseinrichtung kann ein Basisteil beispielsweise in Form einer Folie oder einer dünnen Platte aufweisen, das am Boden befestigt ist und das das Führungsteil bzw. den Bolzen trägt.

Das Führungsteil kann an seinem dem Boden abgewandten Ende eine Kappe oder einen Stopper tragen, die bzw. der so dimensioniert ist, dass eine axiale Bewegung des Einsatzteils längs des Führungsteils begrenzt ist und eine Abnahme des Einsatzteils von dem Führungsteil verhindert ist. Erst nach Lösen der Kappe oder des Stoppers kann das Einsatzteil von dem Führungsteil bzw. dem Bolzen abgenommen werden.

Vorzugsweise ist zwischen dem Führungsteil und dem Einsatzteil ein Ringspalt gebildet ist. Wenn das Führungsteil ein Bolzen mit einem Durchmesser D ist, dann kann in dem Einsatzteil eine Durchbrechung mit einer Weite W > D und vorzugsweise von zumindest W > 1,1 D ausgebildet sein.

Der Abstand des Einsatzteils von dem Boden kann im Bereich von 1 mm bis 20 mm und insbesondere im Bereich von 5 mm und 15 mm liegen.

Insbesondere kann die Befestigungseinrichtung aus Gummi oder Kunststoff, insbesondere aus Silikon oder einem weich-elastischen Polymer bestehen.

Vorzugsweise ist zwischen dem Einsatzteil und der Seitenwand des Schüsselkörpers ein Spalt mit einer Breite b gebildet ist, wobei vorzugsweise gilt: 1 mm ≤ b ≤ 10mm.

Der Boden kann zumindest eine kammerartige Vertiefung aufweisen, welche in Richtung des Garraumes offen ist und zur Aufnahme der Flüssigkeit ausgebildet ist. Vorzugsweise überdeckt das Einsatzteil die Vertiefung zumindest teilweise und insbesondere vollständig und begrenzt zusammen mit der Vertiefung den Aufnahmeraum.

Der Begriff "napfartig" bezeichnet eine Schalenform, die in ihrer Gestalt einer Schüssel ähnelt und eine beispielsweise runde sowie nach oben offene Struktur aufweist. Vorzugsweise handelt es sich um ein rotationssymmetrisches Gebilde, welches durch Rotation einer Kurve um eine Achse erzeugt wird. Typischerweise wird eine parabolische oder zylindrische Kurve verwendet, die eine konvexe Form mit definiertem Boden und Seitenwänden bildet. Der Boden stellt eine begrenzte Fläche dar, während die Seitenwände als Mantelfläche eines Zylinders oder Kegels aufgefasst werden können, die vom Boden bis zur Öffnung des Schüsselkörpers verlaufen.

Ein Vorteil der Erfindung liegt in der Kosteneffizienz des Kochgeschirrs für Induktionskochfelder. Der napfartige Schüsselkörper aus einem induktiv nicht erwärmbaren Material ermöglicht die Verwendung kostengünstiger und leichter Materialien wie Kunststoff oder wasserfester Pappe oder wasserfestem Karton oder sogenanntem Kraftpapier.

Das Einsatzteil aus induktiv erwärmbarem Material, welches auf oder nahe dem Boden des Garraums angeordnet ist, gewährleistet eine gezielte und effiziente Wärmeentwicklung und Wärmeübertragung direkt auf das Gargut innerhalb des Garraums.

In einer bevorzugten Ausgestaltung weist die Seitenwand des Schüsselkörpers eine Wanddicke von 0,2 mm bis 2 mm, insbesondere eine Wanddicke von 0,4 mm bis 0,8 mm, auf.

Vorteilhaft ist hierbei, dass somit eine ausreichende Stabilität und Festigkeit des Schüsselkörpers gewährleistet wird, wodurch die Formbeständigkeit und Langlebigkeit des Kochgeschirrs erhöht werden. Des Weiteren ermöglicht die angepasste Wanddicke eine effiziente Wärmeisolierung, was den Energieverbrauch reduziert und eine gleichmäßige Temperatur im Garraum sicherstellt.

Des Weiteren führt die Wanddicke im Bereich von 0,2 mm bis 2 mm zu einer Reduktion des Schüsselgewichts, was die Handhabung und Nutzung des Kochgeschirrs erleichtert.

Der zwischen dem Boden und dem Einsatzteil ausgebildete Aufnahmeraum dient zur Aufnahme der Flüssigkeit oder des Wassers. Falls der Abstand des Einsatzteils von dem Boden und somit die Größe des Aufnahmeraums nicht ausreicht, kann in Weiterbildung der Erfindung vorgesehen sein, dass der Boden die zumindest eine kammerartige Vertiefung aufweist, die in Richtung des Garraums offen ist. Auf diese Weise ist das Volumen des Aufnahmeraums vergrößert, sodass entsprechend mehr Flüssigkeit beziehungsweise Wasser in den Aufnahmeraum aufgenommen werden kann.

In Weiterbildung der Erfindung ist vorgesehen, dass die Vertiefung als Ringnut ausgebildet ist. Dabei kann die Vertiefung in einem Randbereich und/oder in einem zentrumsnahen Bereich des Bodens ausgebildet sein und sich beispielsweise in Form einer vollständig umlaufenden Ringnut um den Mittelpunkt des Bodens herum erstrecken.

Das Befestigungsmittel dient zur Halterung des Einsatzteils an dem Schüsselkörper. Dabei kann vorgesehen sein, dass das Einsatzteil mittels der Befestigungseinrichtung vorzugsweise direkt mit dem Boden verbunden ist. Vorzugsweise ist das Einsatzteil nur an einer Stelle und vorzugsweise im Mittelpunkt des Einsatzteils bzw. im Mittelpunkt des Bodens des Schüsselkörpers mittels einer sogenannten punktförmigen Befestigung mit dem Boden verbunden. Dies ermöglicht eine vielfältige Bewegung des Einsatzteils relativ zu dem Boden, wobei die Bewegung eine Kippbewegung oder Schwenkbewegung oder auch eine Taumelbewegung sein kann.

Die Bewegungsmöglichkeit des Einsatzteils relativ zu dem Schüsselkörper kann dadurch unterstützt werden, dass die Befestigungseinrichtung aus einem verformungsweichen Material, beispielsweise aus Gummi oder Kunststoff, insbesondere aus Silikon oder einem weich-elastischen Polymer besteht.

Die Befestigungseinrichtung gewährleistet vorzugsweise eine stabile und dauerhafte Verbindung zwischen dem Einsatzteil und dem Boden des napfartigen Schüsselkörpers. Die Verwendung eines metallen Bolzens bietet den Vorteil einer mechanisch robusten und temperaturbeständigen Fixierung, welche auch bei intensiver und langfristiger Nutzung zuverlässig bleibt. Vorzugsweise ist die Befestigungseinrichtung auf der dem Garraum zugewandten Seite des Boden angebracht und insbesondere verklebt, verrastet, verschweißt oder in sonstiger Weise gehalten sein.

Die Befestigungseinrichtung lagert das Einsatzteil so an dem Schüsselkörper, dass das Einsatzteil relativ zum Schüsselkörper (3) beweglich ist, wobei die Befestigungseinrichtung ein vorzugsweise lineares Führungsteil aufweist, das das Einsatzteil (7) mit Spiel durchdringt und so ausgestaltet ist, dass eine Bewegung des Einsatzteils (7) längs des Führungsteils (12) ermöglicht ist. Das Führungsteil ist dabei vorzugsweise mit dem Boden des Schüsselkörpers verbunden und die Führung erlaubt es, dass das Einsatzteil nicht nur um das Führungsteil kippen, schwenken oder taumeln kann, sondern zusätzlich ist eine Linearbewegung längs des Führungsteils möglich. Vorzugsweise erstreckt sich das Führungsteil senkrecht zum Boden des Schüsselkörpers.

Die Führung kann beispielsweise als vorzugsweise kreiszylindrischer Bolzen ausgebildet sein, der das Einsatzteil an einer Durchbrechung vorzugsweise mit Spiel durchdringt. Dabei kann vorgesehen sein, dass das Einsatzteil schwimmend gelagert und/oder um den Bolzen rotierbar ist.

Wenn das Einsatzteil bei Gebrauch des Kochgeschirrs durch die Wirkung des elektromagnetischen Feldes erwärmt wird, und sich dabei relativ zum Schüsselkörper bewegt, sollte verhindert werden, dass das zu erwärmende und/oder zu kochende Lebensmittel, beispielsweise Nudeln, in den Aufnahmeraum unterhalb des Einsatzteils gelangt. Zu diesem Zweck kann vorgesehen sein, dass zwischen dem Einsatzteil und der Seitenwand des Schüsselkörpers ein Spalt mit einer Breite b gebildet ist, wobei die Breite im Bereich von 1 mm bis 10 mm und insbesondere im Bereich von 1 mm bis 5 mm liegt. Der Spalt sollte nur so breit ausgebildet sein, dass ein Eindringen von Nudeln oder anderen festen Bestandteilen des zu erwärmenden und/oder zu kochenden Lebensmittels in den unter dem Aufnahmeteil ausgebildeten Aufnahmeraum zuverlässig vermieden ist.

In einer möglichen Ausgestaltung kann vorgesehen sein, dass das Einsatzteil eine Platte oder ein Blech insbesondere aus ferritischem Edelstahl ist. Die Platte oder das Blech können kreisförmig oder rechteckig ausgebildet sein.

In einer bevorzugten Ausgestaltung weist das plattenförmige Einsatzteil eine Dicke von 0,2 mm bis 1 mm, insbesondere eine Dicke von 0,2 mm bis 0,5 mm, und insbesondere bevorzugt eine Dicke von 0,3 mm bis 0,4 mm auf.

Ein Einsatzteil in diesem Dickenbereich gewährleistet eine schnelle und gleichmäßige Wärmeverteilung, wodurch die Effizienz des Kochprozesses erhöht wird. Des Weiteren bleibt das Material formstabil und widerstandsfähig gegenüber mechanischen Belastungen, was die Langlebigkeit des Kochgeschirrs verbessert. Ein weiterer Vorteil dieser Dicke ist die Möglichkeit der Bewegung des Einsatzteils bei Erwärmung einer sich in dem Aufnahmeraum befindlichen Flüssigkeit. Diese Bewegung verhindert das Anhaften von Speisen und gewährleistet eine gleichmäßige Garung.

Der Schüsselkörper kann aus Kunststoff, insbesondere Polypropylen und/oder aus Zellulose, insbesondere Kraftkarton und/oder aus einem nicht-ferromagnetischen Material bestehen.

Vorzugsweise gehört zu dem Kochgeschirr auch ein lösbar auf die Seitenwand aufsetzbarer Deckel zum Verschließen des Garraums. In Weiterbildung der Erfindung kann vorgesehen sein, dass dieser aus dem gleichen Material wie der Schüsselkörper besteht, wodurch die Entsorgung des Kochgeschirrs umweltverträglich ist.

Das Einsatzteil ist vorzugsweise so mit dem Schüsselkörper verbunden, dass es nach Gebrauch des Kochgeschirrs von diesem wieder gelöst werden kann, was durch eine lösbare Verrastung, einen sonstigen lösbaren Formschluss oder auch durch lösbare Befestigungselemente, beispielsweise Halteschrauben, erreicht werden kann. Auf diese Weise ist es möglich, die aus unterschiedlichen Materialien bestehenden Teile, nämlich den Schüsselkörper einerseits und das Einsatzteil andererseits voneinander zu lösen und separat zu entsorgen.

Das Kochgeschirr kann als Einweg-Kochgeschirr ausgebildet sein, das aus kostengünstigen und leicht verfügbaren Materialien besteht. Ein Ausführungsbeispiel des Einweg-Kochgeschirrs, welches für den einmaligen Gebrauch ausgebildet ist, weist einen Schüsselkörper beispielsweise aus Kraftkarton, ein Einsatzteil beispielsweise aus Edelstahl sowie einen Deckel beispielsweise aus Polypropylen auf. Nach dem Gebrauch kann das Einweg-Kochgeschirr nach Entnahme des Einsatzteils einfach entsorgt oder recycelt werden, was die Reinigung überflüssig macht und die Handhabung erleichtert. Dieses Einweg-Kochgeschirr eignet sich insbesondere für den Einsatz für Catering-Services, wo eine schnelle und effiziente Zubereitung von Speisen gewünscht ist, ohne sich um die anschließende Reinigung kümmern zu müssen.

Die Aufgabe hinsichtlich des Sets zum Umrüsten eines Schüsselkörpers zu einem Kochgeschirr für ein Induktionskochfeld wird durch ein Set mit Merkmalen des Anspruchs 14 gelöst. Das Set weist ein Einsatzteil aus einem induktiv erwärmbaren Material, beispielsweise eine Platte aus Stahl oder Edelstahl, und ein Befestigungsmittel beispielsweise mit den vorgenannten Merkmalen zur Anbringung des Einsatzteils am Schüsselkörper auf.

Das Set ermöglicht es, dass ein Benutzer einen bereits in seinem Haushalt vorhandenen Schüsselkörper aus einem induktiv nicht erwärmbaren Material unter Verwendung des Sets zu dem erfindungsgemäßen Kochgeschirr für ein Induktionskochfeld umrüstet oder nachrüstet. Zu diesem Zweck befestigt der Benutzer das Befestigungsmittel am Boden des Schüsselkörpers und montiert das plattenförmige Einsatzteil so an dem Befestigungsmittel, dass das Einsatzteil relativ zum Schüsselkörper beweglich ist.

Folgende nur beispielhafte Anmerkungen:
Das Kochgeschirr (Modul) wurde erfolgreich mit verschiedenen Formaten und Materialien getestet und erfüllt die Anforderungen des globalen Marktes für Fertiggerichte.

Seine Konstruktion erlaubt die Integration in bestehende Verpackungssysteme und unterstützt industrielle Skalierbarkeit sowie die Einführung im großen Maßstab.

Das induktive Kochgeschirr stellt eine technologische Weiterentwicklung im Bereich der Fertiggastronomie dar. Es bietet eine nachhaltige Lösung, die den aktuellen Bedürfnissen der Verbraucher entspricht.

Feldtests und Marktanalysen bestätigen das Potenzial der Erfindung, das Konzept der schnellen und gesunden Küche neu zu definieren und eine bewusstere Ernährung zu fördern.

Der globale Markt für Fertiggerichte verzeichnet ein starkes Wachstum:
- geschätzter Wert im Jahr 2024: 383,93 Milliarden US-Dollar
- Prognose für 2028: über 488 Milliarden US-Dollar (+5% jährlich)
- europäisches Segment: von 85,65 Milliarden (2023) auf über 100 Milliarden (2028)

In diesem Kontext positioniert sich das Induktions-Kochgeschirr als innovative und nachhaltige Lösung, die den neuen Anforderungen der Verbraucher gerecht wird und eine technologisch fortschrittliche Alternative bietet.

Bevorzugte Komponenten und Funktionsweise:
Das Kochgeschirr ist ein kompaktes, integrierbares und modulares System, das für die sichere, kontrollierte und energieeffiziente Zubereitung von Lebensmitteln direkt in nichtmetallischen Einwegbehältern konzipiert wurde. Am Boden des Behälters installiert, besteht das Modul aus funktional abgestimmten Komponenten, die den Wärmetransfer optimieren, die strukturelle Integrität der Verpackung erhalten und die gastronomische Qualität des Endprodukts gewährleisten. Die Erfindung definiert die Rolle des Behälters neu, indem sie ihn von einem passiven Träger zu einem aktiven Bestandteil des Kochprozesses macht.

Das System ist mit bestehenden Verpackungs- und Logistiklinien kompatibel, reduziert Abfall und verbessert die Energieeffizienz - eine technologisch fortschrittliche Lösung für eine Gesellschaft, die auf Geschmack, Gesundheit und Nachhaltigkeit ausgerichtet ist.

Das Einsatzteil insbesondere in Form einer Metallplatte bildet die zentrale Kochfläche des Moduls. Sie kann aus dünnem ferritischem Edelstahlblech mit einer Dicke zwischen 0,3mm und 0,5mm bestehen und dient als primärer Wärmeleiter, der die durch magnetische Induktion erzeugte Wärme eines darunterliegenden elektrischen Induktors schnell und effizient überträgt. Die Platte verfügt über eine zentrale Durchgangsbohrung, die eine schwimmende Montage und mechanische Justierung ermöglicht. Diese Platte stellt die direkte Kochzone dar, in der die Lebensmittel gleichmäßig und kontrolliert erhitzt oder gegart werden.

Das mechanische Trägersystem der Metallplatte kann aus integrierten Elementen bestehen, die eine funktionale Einheit bilden:
- beispielsweise eine selbstklebende rechteckige Basis, die eine stabile Befestigung am Behälterboden gewährleistet,
- beispielsweise eine zentral positionierte Gewindeschraube als Führungsbolzen, die eine vertikale Justierung der Platte ermöglicht,
- ein integrierter Mittelsteg am Boden des Schüsselkörpers, der eine untere Kavität zur Aufnahme von Wasser erzeugt
- eine Kappe in Form beispielsweise einer oberen Stellmutter, die die Platte stabilisiert und deren axiale Bewegung begrenzt. Diese Komponenten wirken synergetisch, um die kontrollierte Beweglichkeit der Platte und die Bildung einer thermoregulierenden Kavität zwischen Platte und Behälterboden zu gewährleisten.

Alle Komponenten des Moduls sind für die Verwendung mit umweltfreundlichen, recycelbaren oder kompostierbaren Materialien wie PP, Kraftpapier und Bagasse ausgelegt.

Die Hauptziele sind Lebensmittelsicherheit, Umweltverträglichkeit, Vermeidung von Kontamination und der Erhalt der Behälterstruktur während des Kochvorgangs

Die Wahl von ferritischem Edelstahl für das Einsatzteil basiert auf überlegenen technischen und hygienischen Eigenschaften: Hohe thermische Stabilität, Korrosionsbeständigkeit, Eignung für Lebensmittelkontakt und Verzicht auf potenziell schädliche chemische Beschichtungen wie PTFE oder PFOA.

Dank ihrer kompakten und homogenen Struktur ermöglicht die Platte ein schnelles Erreichen hoher Temperaturen, die gleichmäßige Wärmeverteilung über die gesamte Oberfläche, eine homogene Garung bei Erhalt natürlicher Säfte und authentischer Aromen.

Die Geometrie der Platte ist variabel und anpassbar, um die Kompatibilität mit Behältern unterschiedlicher Form und Größe zu gewährleisten. Sie kann rund, rechteckig oder konturiert ausgeführt sein - je nach funktionalen, ästhetischen oder ergonomischen Anforderungen. Diese konstruktive Flexibilität ermöglicht eine optimale Integration in modulare Systeme und eine gezielte Anpassung an verschiedene Anwendungsbereiche.

Der Einsatz von Edelstahl ist entscheidend für die Zubereitung gesunder, schmackhafter und gleichmäßig gegarter Speisen. Das Material erlaubt hohe Temperaturen und eine homogene Wärmeverteilung, wodurch die natürlichen Eigenschaften der Lebensmittel erhalten bleiben.

Für die Lebensmittelzubereitung geeignete Edelstähle müssen von hoher Qualität sein, temperaturstabil und korrosionsbeständig, um eine effektive und sichere Garung in kurzer Zeit zu gewährleisten. In einem Kontext, in dem gesunde Ernährung zunehmend an Bedeutung gewinnt, stellt die Verwendung von Edelstahl ohne Antihaftbeschichtungen und chemische Zusätze wie PTFE oder PFDA eine bewusste und sichere Wahl dar.

Antihaft-Kochflächen, insbesondere solche mit Teflon, enthalten PTFE - ein Kunststoffpolymer, das bei Temperaturen über 300 °C toxische Dämpfe freisetzen kann.

Diese Dämpfe können grippeähnliche Symptome verursachen, bekannt als "Polymerfieber" oder "Teflon-Grippe". Zudem sind bestimmte chemische Bestandteile solcher Beschichtungen persistent und stellen ein potenzielles Risiko für Gesundheit und Umwelt dar. Auch die Verwendung von Aluminiumfolie beim Kochen kann unerwünschte Kontaminationen verursachen und Gesundheitsrisiken erhöhen. Bevorzugte technische Daten der Metallplatte
- Material: Ferritischer Edelstahl • Dicke: 0,3mm - 0,5mm
- Geometrie: Variabel und anpassbar
- Zentrale Durchgangsbohrung: Durchmesser ca. 6mm

Das Trägersystem der Metallplatte stellt ein wesentliches strukturelles Element des Kochmoduls dar. Es wurde entwickelt, um eine stabile Verankerung, funktionale Beweglichkeit und einen effektiven thermischen Schutz der Heizfläche zu gewährleisten. Die Architektur des Trägersystems integriert mechanische Komponenten und ausgewählte Materialien, die für hohe Leistung unter komplexen thermischen und lebensmitteltechnischen Betriebsbedingungen geeignet sind.

Das Trägersystem besteht vorzugsweise aus folgenden Hauptkomponenten:
Einem rechteckigen Basisteil mit integriertem Mittelsteg, einem Bolzen oder einer Gewindeschraube und einer Kappe oder Anschlag- oder Stellmutter.

Diese Komponenten bilden eine funktionale Einheit, die für die direkte Integration in lebensmitteltaugliche Einwegbehälter konzipiert ist.

Das Basisteil ist vorzugsweise rechteckig ausgeführt und besteht aus lebensmitteltauglichem Kunststoff. Verwendete Materialien sind beispielsweise PE (Polyethylen), PET (Polyethylenterephthalat) oder PP (Polypropylen). Diese Polymere gewährleisten eine sichere, einfache und kontaminationsfreie Befestigung an der Innenfläche des Behälters. Das Basisteil integriert vorzugsweise sowohl den Mittelsteg als auch den Bolzen und dient als strukturelle Plattform für die Heizplatte.

Technische Merkmale des Basisteils können sein:
- Toxikologische Sicherheit: keine Freisetzung gefährlicher chemischer Verbindungen, auch bei Erhitzung oder längerem Kontakt
- Chemische Stabilität: beständig gegenüber Fetten, Säuren, Alkohol und Reinigungsmitteln
- Thermische Beständigkeit: geeignet für Wasch-, Sterilisations- und Kochprozesse bei hohen oder niedrigen Temperaturen
- Normenkonformität: Materialien gemäß den Positivlisten der EU und FDA für Lebensmittelkontakt

Die Geometrie des Basisteils kann je nach Behältertyp angepasst werden. Auch das Befestigungssystem kann variieren, um die Kompatibilität mit verschiedenen Einwegverpackungslösungen zu gewährleisten.

Der Mittelsteg kann zwei Hauptfunktionen erfüllen:
Anhebung der Metallplatte: verhindert direkten Kontakt mit dem Behälterboden und schützt vor hohen Temperaturen,
Bildung eines Zwischenraums: erzeugt eine Zwischenkammer zur Aufnahme von Kochwasser mit thermischer und fluiddynamischer Funktion

Der vorzugsweise integrierte Führungsbolzen bzw. die integrierte Schraube ermöglicht eine kontrollierte axiale Bewegung der Platte und einstellbare Fixierung mittels der Kappe, die die Position während des Kochvorgangs bestimmt.

Das Trägersystem für die Metallplatte stellt eine fortschrittliche ingenieurtechnische Lösung dar, die entwickelt wurde, um thermische und lebensmitteltechnische Sicherheit zu gewährleisten, die modulare Integration in Einwegbehälter zu erleichtern, die Struktur für dynamische Funktionen des Kochsystems vorzubereiten und die Position der Platte durch die Kappe während des Kochvorgangs zu definieren.

Die Metallplatte kann um die Bolzen- oder Schraubenachse rotieren ausführen, wodurch ein oszillierender Bewegungsimpuls entsteht, der durch das Sieden des Wassers induziert wird.

Das Induktions-Kochmodul ist für die Verwendung mit Einwegbehältern konzipiert, wie sie üblicherweise in der industriellen Verpackung von Fertiggerichten eingesetzt werden. Diese Behälter sind in einer Vielzahl von Formen und Größen erhältlich und zeichnen sich durch geringe Herstellungskosten aus.

Beispielhaft kann ein rechteckiger Einwegbehälter vorgesehen sein. Kompatible geometrische Konfigurationen umfassen: Rechteckig, Zylindrisch, Elliptisch. Weitere variable Formen

Das Fassungsvermögen ist variabel und die Wandstärke beträgt ca. 0,5-0,8mm

Der Deckel kann aus Kraftpapier, PLA (Polymilchsäure) oder PE bestehen und der Behälterkörper vorzugsweise aus Kraftpapier, PP oder kompostierbarer Zellstoffmasse.

Technische Spezifikationen
Temperaturbeständigkeit: bis zu 90-110 °C
Hohe Flüssigkeitsdichtigkeit durch Innenbeschichtung mit PE oder PLA

Konformität und Entsorgung
MOCA: Konformität mit europäischen Vorschriften für Lebensmittelkontakt
PFAS-FREI: Verfügbarkeit von Varianten ohne per- und polyfluorierte Alkylsubstanzen
Entsorgung: je nach Zusammensetzung getrennt (Papier) oder kompostierbar gemäß geltenden Umweltstandards
Das beschrieben Kochgeschirr bildet ein innovatives Kochsystem, das durch fortschrittliche ingenieurtechnische Lösungen entwickelt und durch Feldtests validiert wurde. Die Integration eines Induktions-Heizelements in einen Einwegbehälter hat eine Reihe funktionaler Merkmale hervorgebracht, die auf die Optimierung der thermischen Effizienz, die mechanische Kompatibilität und die Lebensmittelsicherheit abzielen. Die dargestellten Konfigurationen sind das Ergebnis gezielter konstruktiver Entscheidungen, die auf jahrelanger Forschung und kontinuierlicher Weiterentwicklung basieren.

Das Induktions-Heizelement ist zentral unter Boden des Behälters positioniert, um eine direkte und kontrollierte Wärmeübertragung auf den Inhalt zu gewährleisten. Die zwischen Modul und Behälterboden entstehende Schutzkavität dient als Reservoir für das Kochwasser und wirkt als thermoregulierendes Medium. Diese Konfiguration reduziert das Risiko einer Überhitzung der Behälterwände (thermische Belastbarkeit: 100-110 °C), während das Modul selbst für Betriebstemperaturen über 250 °C ausgelegt ist.

Die Heizplatte kann auf einem zentralen Bolzen oder Schraube montiert und mit einer verstellbaren Kappe oder Stellmutter ausgestattet sein. Dieses System ermöglicht kontrollierte vertikale und rotatorische Bewegungen und erlaubt der Platte, sich an geometrische Variationen und thermische Belastungen anzupassen. Der definierte Abstand (~2mm) zwischen der Platte und der Innenwand des Behälters gewährleistet thermische Isolierung und ermöglicht den Durchfluss des Wassers in die untere Kavität. Die obere Stellmutter stabilisiert die gesamte mechanische Struktur.

Die Heizplatte besteht vorzugsweise aus ferritischem Edelstahl, ausgewählt aufgrund seiner hohen Temperaturbeständigkeit und Induktionstauglichkeit. Sie bewegt sich frei innerhalb des durch Bolzen bzw. Schraube, Kappe oder Stellmutter und Basisteil oder Mittelsteg begrenzten Raums und ist in ein dynamisches Medium aus Wasser und Lebensmitteln eingebettet. Diese kontrollierte Beweglichkeit ist vorteilhaft für den Ausgleich thermischer Ausdehnungen zwischen unterschiedlichen Materialien, die Vermeidung mechanischer Belastungen und Wandkontakte und die Förderung einer dynamischen und gleichmäßigen Wärmeverteilung.

Die elastische und sichere Interaktion zwischen Platte und Umgebung wurde durch experimentelle Tests und thermomechanische Simulationen bestätigt.

Während der Kochphase erzeugt das Wasser in der unteren Kavität rhythmische Hebebewegungen der Heizplatte. Die vom Wasser gespeicherte Wärmeenergie induziert Mikrobewegungen in vertikaler und rotatorischer Richtung. Diese Dynamik bewirkt einen natürlichen Rühreffekt der Lebensmittel auf der Kochfläche, die Vermeidung von Anhaftungen und die Reduktion lokaler Karamellisierung, wie sie bei statischer Erhitzung typisch ist.

Die Kochwasserkavität wirkt zudem als thermischer und mechanischer Puffer, verhindert direkten Kontakt zwischen Metallplatte und Behälterboden und trägt zur strukturellen Integrität des Behälters bei, insbesondere in der Endphase des Kochvorgangs.

Das integrierte Induktions-Kochgeschirr kombiniert synergetisch ein Induktions-Heizelement, eine schwimmend gelagerte Metallplatte, eine schützende untere Kavität im Schüsselkörper, einen funktionalen Abstand der Metallplatte zur Behälterwand und einen leichten, nachhaltigen Einwegbehälter. Diese Konfiguration ermöglicht eine automatisierte, effiziente und sichere Lebensmittelzubereitung mit Fokus auf gastronomische Qualität, strukturellen Behälterschutz und Umweltverträglichkeit. Das System eignet sich ideal für industrielle Anwendungen, automatisierte Gastronomie und nachhaltige Verpackungslösungen.

Es ist erfindungsgemäß ein Modul vorhanden, das so ausgelegt ist, dass eine untere Kammer des Behälters teilweise mit Wasser gefüllt ist und als thermische Pufferzone dient, ausgelegt zur Aufnahme überschüssiger Wärme, die von der Heizplatte in der Endphase des Kochvorgangs erzeugt wird, zur Stabilisierung der Betriebstemperatur im Bereich von 90 °C bis 110 °C und zur Vermeidung von Verformungen oder strukturellen Schäden am Behälter, insbesondere bei Materialien mit geringer Wärmebeständigkeit.

Das Modul kann so ausgestaltet sein, dass das Wasser in der unteren Kammer während der Kochphase einen Dampfdruck erzeugt, der eine Auftriebskraft auf die darüberliegende Kochplatte ausübt und kontrollierte vertikale Schwingungen sowie Mikrorotationen um die Achse der zentralen Schraube induziert, wodurch ein natürlicher Rühreffekt des Lebensmittelinhalts simuliert wird, die Wärmeverteilung verbessert und das Risiko von Anhaftungen reduziert wird, im Gegensatz zu konventionellen statischen Heizsystemen, die keine mechanischen Interaktionen durch das thermische Medium vorsehen.

Das Modul kann so ausgestaltet sein, dass das System die Zubereitung von "Ready-to-Cook"-Gerichten in einem Zeitraum von 3 bis 6 Minuten ermöglicht, mit vollständiger Wasseraufnahme und gleichmäßiger Garung des Lebensmittels, ohne Notwendigkeit des Abgießens oder manueller Eingriffe, geeignet für automatisierte und industrielle Anwendungen.

Das Modul kann so ausgestaltet sein, dass die Kombination aus schwimmender Verankerung, thermischer Pufferkammer und dynamischer Bewegung der Platte ein funktionales Ökosystem bildet, das thermische Belastungen ausgleicht, die Lebensmittelsicherheit erhöht und die Energieeffizienz des Kochprozesses verbessert.

Weitere Merkmale der Befestigungseinrichtung sind bereits im Zusammenhang mit dem Kochgeschirr oben erläutert und diese Merkmale können auch einzeln oder in Kombination bei dem Set zur Umrüstung des Schüsselkörpers verwirklicht sein.

Weitere Merkmale hinsichtlich des Einsatzteils sind ebenfalls im Zusammenhang mit dem Kochgeschirr bereits oben erläutert und können bei dem Set zur Umrüstung des Schüsselkörpers einzeln oder in Kombination verwirklicht sein.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: einen schematischen Schnitt eines Ausführungsbeispiels eines erfindungsgemäßen Kochgeschirrs,
- Fig. 2: einen Fig. 1 entsprechenden schematischen Schnitt mit einer Weiterbildung des Schüsselkörpers,
- Fig. 3: eine schematische Schnittdarstellung einer Ausführungsform der Befestigung des Einsatzteils am Schüsselkörper
- Fig. 4: eine Explosionsdarstellung der Bauteile einer Befestigungseinrichtung,
- Fig. 5: eine schematische Darstellung einer Phase des Kochprozesses und
- Fig. 6: eine schematische Darstellung einer weiteren Phase des Kochprozesses.

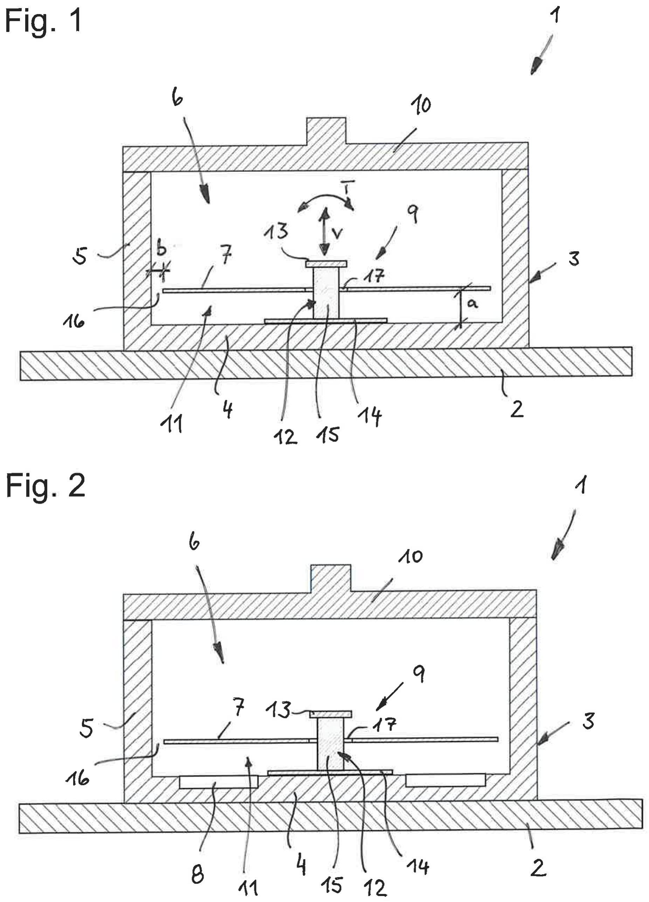

Ein in Figur 1 schematisch dargestelltes Kochgeschirr 1 weist einen napfartigen Schüsselkörper 3 aus einem induktiv nicht erwärmbaren Material auf, der einen im wesentlichen horizontalen Boden 4 und eine umlaufende Seitenwand 5 zur Begrenzung eines Garraums 6 besitzt. Der Schüsselkörper 3 kann als Spritzgussteil aus Polypropylen ausgebildet oder aus wasserdichtem Karton oder Papier gebildet sein. Der Schüsselkörper 3 kann mit seinem Boden 4 auf ein Induktionskochfeld 2 aufgesetzt werden.

Das Kochgeschirr 1 weist darüber hinaus ein plattenartiges Einsatzteil 7 aus einem induktiv erwärmbaren Material auf, das als ferritisches Edelstahlblech ausgebildet sein kann. Das plattenar- tige Einsatzteil 7 ist mittels einer Befestigungseinrichtung 9 in seinem mittleren Bereich mit einem mittleren Bereich des Bodens 4 des Kochgeschirrs 1 so verbunden, dass es einen Abstand a vom Boden 4 besitzt, wobei der Abstand a im Bereich von 1 mm und 10 mm liegen kann.

Die Befestigungseinrichtung 9 ist so ausgestaltet, dass das plattenartige Einsatzteil 7 sowohl eine Schwenk- oder Kippbewegung relativ zu dem Schüsselkörper 3 (Doppelpfeil T) als auch eine vertikale Auf- und Abbewegung (Doppelpfeil V) ausführen kann ist. Es ist auch eine Taumelbewegung des Einsatzteils 7 relativ zum Schüsselkörper 3 möglich. Aufgrund des Abstandes a des Einsatzteils 7 vom Boden 4 des Schüsselkörpers 3 ist zwischen den Boden 4 und dem Einsatzteil 7 ein Aufnahmeraum 11 für eine Flüssigkeit und insbesondere Wasser gebildet.

Das Einsatzteil 7 ist mittels der Befestigungseinrichtung 9 mit dem Boden 4 verbunden, wobei es sich parallel zum Boden 4 des Schüsselkörpers 3 erstreckt. Insbesondere kann die Befestigungseinrichtung 9 im Mittelpunkt des Bodens 4 und/oder des Einsatzteils 7 angeordnet sein.

Die Befestigungseinrichtung 9 weist ein Basisteil 14 in Form einer Folie oder einer dünnen Platte auf, die am Boden 4 des Schüsselkörpers 3 befestigt ist. Am dem Basisteil 14 ist ein vertikal aufragendes Führungsteil 12 in Form eines Bolzens 15 befestigt.

Das Führungsteil 12 trägt an seinem dem Boden 4 abgewandten, oberen Ende eine als Stopper dienende Kappe 13, die so dimensioniert ist, dass die Bewegung des Einsatzteils 7 längs der Führungsteils 12 begrenzt und eine Abnahme des Einsatzteils 7 von dem Führungsteil 12 verhindert ist, solange die Kappe 13 auf dem Führungsteil sitzt. Erst nach Lösen der Kappe 13 kann das Einsatzteil 7 von dem Führungsteil 12 bzw. dem Bolzen abgenommen werden.

Der Abstand a des Einsatzteils 7 von dem Boden 4 kann im Bereich von 1 mm bis 20 mm und insbesondere im Bereich von 5 mm und 15 mm liegen.

Das Einsatzteil 7 ist so dimensioniert, dass zwischen dem Rand des Einsatzteils 7 und der Innenoberfläche der Seitenwand 5 des Schüsselkörpers 3 ein relativ enger Spalt 16 gebildet ist, der eine Breite b besitzt, wobei b im Bereich von 1 mm bis 10 mm und insbesondere im Bereich von 1 mm bis 5 mm liegt.

Auf der Oberseite des Schüsselkörpers 3 ist ein Deckel 10 angeordnet, der den Garraum 6 verschließt. Vorzugsweise besteht der Deckel 10 aus dem gleichen Material wie der Schüsselkörper 3.

Figur 2 zeigt eine Weiterbildung des Kochgeschirrs 1 gemäß Figur 1, wobei die Weiterbildung sich von dem in Figur 1 dargestellten Ausführungsbeispiel dadurch unterscheidet, dass das Volumen des Aufnahmeraums 11 durch ein oder mehrere im Boden 4 des Schüsselkörpers 3 ausgebildete Vertiefungen 8 oder Ausnehmungen vergrößert ist. Im dargestellten Ausführungsbeispiel ist die Vertiefung 8 von einer um den Mittelpunkt des Bodens 4 umlaufenden Ringnut gebildet, jedoch sind auch andere Formen der Vertiefung 8 denkbar.

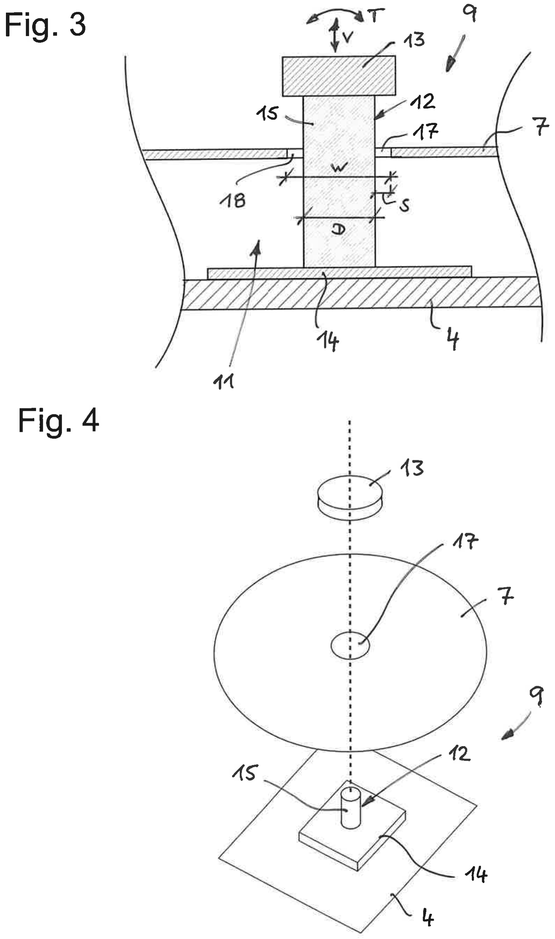

In Figur 3 ist eine vergrößerte Detaildarstellung der Befestigungseinrichtung 9 gezeigt, die nicht nur eine Kipp- und Taumelbewegung des Einsatzteils 7 relativ zum Boden 4 des Schüsselkörpers 3, sondern auch eine lineare Bewegung des Einsatzteils 7 längs des bolzenartigen Führungsteils 12 ermöglicht.

Die Befestigungseinrichtung 9 besitzt das flache, folien- oder plattenartige Basisteil 14, das mit der dem Garraum 6 zugewandten Oberfläche des Bodens 4 verbunden ist. Die Verbindung kann durch Kleben, Schweißen oder auch durch eine Verrastung erzeugt werden. Auf seiner dem Boden 4 abgewandten Seite trägt das Basisteil 14 das Führungsteil 12 in Form des vorzugsweise kreiszylindrischen Bolzens 15, der sich senkrecht zur Oberfläche des Bodens 4 erstreckt. Das Einsatzteil 7 besitzt eine mittige Durchbrechung 17, die mit Spiel von dem Bolzen 15 durchdrungen ist. An dem dem Basisteil 14 abgewandten Ende des Bolzens 15 ist an diesem ein Anschlagteil in Form der Kappe 13 gehalten. Auf diese Weise kann das plattenartige Einsatzteil 7 relativ zum Boden 4 des Schüsselkörpers 3 nicht nur eine Kipp- und Taumelbewegung, wie es durch den Doppelpfeil T angedeutet ist, sondern auch eine lineare Hubbewegung ausführen, wie sie durch den Doppelpfeil V angedeutet ist.

Zwischen dem Führungsteil 12 und dem Einsatzteil 7 ist ein Ringspalt 18 gebildet, wobei das Führungsteil 12 in Form des Bolzen 15 einem Durchmesser D und die Durchbrechung 17 in dem Einsatzteil eine Weite W > D aufweist. Somit durchdringt das Führungsteil 12 die Durchbrechung 17 des Einsatzteils 7 mit Spiel unter Bildung des Ringspalts 18, der die Breite S = (W-D)/2 besitzt, wobei S im Bereich von 1,0 mm und 5,0 mm liegt.

Figur 4 zeigt ein Set zur Umrüstung eines Schüsselkörpers aus einem induktiv nicht erwärmbaren Material zu einem Kochgeschirr für ein Induktionskochfeld. Das Set weist ein Einsatzteil 7 in Form einer kreisförmigen oder quadratischen (nicht dargestellt) metallischen Platte auf, die eine mittige Durchbrechung 17 besitzt. Eine Befestigungseinrichtung 9 besitzt ein vorzugsweise plattenförmiges Basisteil 14, das mit der dem Garraum zugewandten Oberfläche des Bodens 4 des Schüsselkörpers durch Kleben, Schweißen, Verrastung oder in sonstiger Weise verbunden werden kann. Auf seiner oberen Seite trägt das Basisteil 14 ein Führungsteil 12 in Form eines vorzugsweise kreiszylindrischen Bolzen 15, der sich frei auskragend vom Basisteil 14 nach oben erstreckt. Das plattenförmige Einsatzteil 7 kann mit seiner mittigen Durchbrechung 17 so auf den Bolzen 15 aufgesetzt werden, dass das Einsatzteil 7 sowohl in seiner Plattenebene als auch senkrecht dazu beweglich ist.

Um das plattenförmige Einsatzteil 7 auf dem Bolzen 15 des Befestigungsmittels 9 zu halten, ist ein Anschlagteil in Form einer Kappe 13 vorgesehen.

Um einen bereits im Haushalt vorhandenen Schüsselkörper zu einem erfindungsgemäßen Kochgeschirr umzurüsten, befestigt der Benutzer das Basisteil 14 am Boden des Schüsselkörpers, setzt das plattenförmige metallische Einsatzteil 7 mit seiner Durchbrechung 17 auf den Bolzen 15 des Befestigungsmittels 9 und sichert das Einsatzteil 7 durch die Kappe 13.

Wenn das Befestigungsmittel 9 lösbar mit dem Schüsselkörper verbunden ist, kann der Benutzer nach dem Garvorgang das Befestigungsmittel vom Schüsselkörper lösen und vorzugsweise entsorgen. Der Schüsselkörper kann dann gereinigt werden und mittels eines weiteren Sets des genannten Aufbaus zur nochmaligen Verwendung umgerüstet werden.

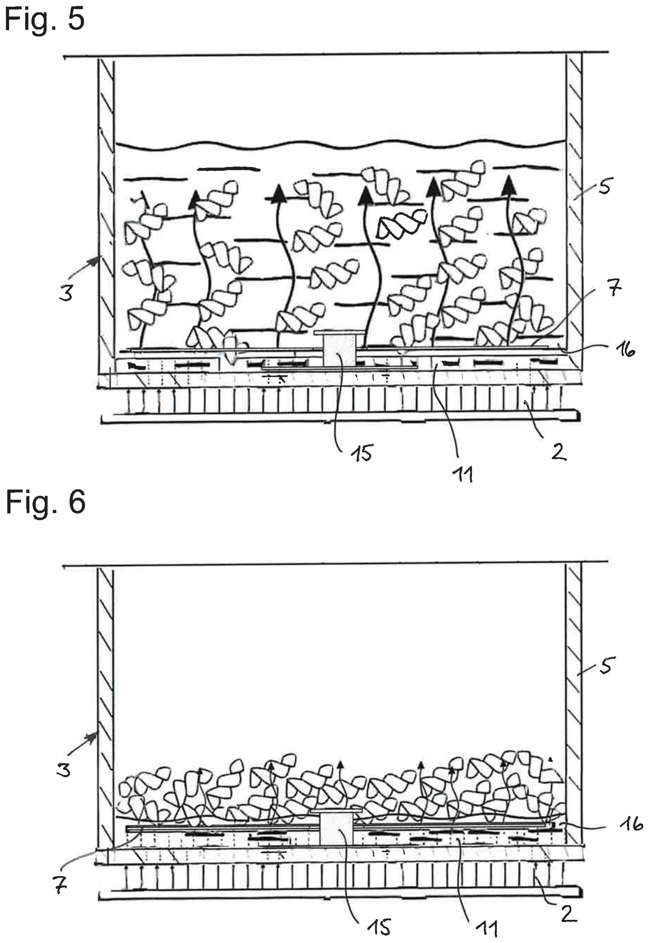

Die Kavität zwischen dem Einsatzteil (Metallplatte) und dem Behälterboden zusammen mit den seitlichen Zwischenräumen ermöglicht die Zirkulation des Kochwassers und verbessert die thermische Isolierung. Dieses System schützt den Behälter vor Verformungen und strukturellen Schäden und gewährleistet Stabilität auch bei hohen Temperaturen. Das Thermomanagement wurde auf die Eigenschaften von Einwegmaterialien abgestimmt, um deren Integrität während des gesamten Kochzyklus zu erhalten. Diese Funktion wird im folgenden Kapitel anhand eines praktischen Beispiels zur Zubereitung von Pasta (Fusilli) anhand de Figuren 5 und 6 veranschaulicht.

Die synergetische Interaktion der beschriebenen Funktionen ermöglicht eine operative Modularität für Behälter unterschiedlicher Formen und Größen, energetische Effizienz durch gezielte Wärmeleitung und Umweltverträglichkeit durch den Einsatz recycelbarer Materialien und nachhaltiger Prozesse sowie Lebensmittelsicherheit durch Temperaturkontrolle und Vermeidung von Anhaftungen.

Das System ist für industrielle Skalierbarkeit konzipiert und eignet sich für Anwendungen in Gastronomie, Lebensmittelproduktion und automatisierten Kochsystemen.

Die in Abb. 5 und 6 dargestellten Funktionen sind das Ergebnis eines fortschrittlichen Entwicklungsprozesses, gestützt durch umfassende Tests und praktische Validierungen. Jede Komponente wurde so konzipiert, dass sie synergetisch mit den anderen interagiert und ein effizientes, sicheres und anpassungsfähiges Kochsystem bildet.

Der kontrollierte Abstand (~2mm) erzeugt einen Isolierungseffekt, der den Behälter schützt und die Betriebssicherheit erhöht. Das integrierte Induktions-Kochmodul stellt eine technische und funktionale Innovation dar. Die Abbildungen zeigen, wie jedes Element optimiert wurde, um maximale Effizienz, Sicherheit und Kochqualität zu gewährleisten - geeignet für vielfältige industrielle und häusliche Einsatzbereiche.

Das in Einwegbehälter integrierte Induktions-Kochsystem stellt eine fortschrittliche ingenieurtechnische Lösung für die automatisierte Lebensmittelzubereitung dar. Im vorliegenden Anwendungsbeispiel wird die Zubereitung einer Portion Fusilli (80-100g) in einem Einwegbehälter mit integriertem Induktions-Heizmodul beschrieben. Der Prozess ist in funktionale Phasen unterteilt, wobei jede Phase spezifischen Komponenten zugeordnet ist.

### Phase 1 - Initiale Vorbereitung und Systemaktivierung

Der Einwegbehälter 3, hergestellt aus kompostierbarem oder recycelbarem Material wie PP, Kraftpapier oder Zellulose, wird mit Fusilli und einer exakt dosierten Wassermenge von beispielsweise ca. 230ml befüllt. Diese Menge ist so gewählt, dass eine vollständige Garung ohne Abgießen ermöglicht wird und ein schneller Siedepunkt sowie effizienter Wärmeübergang erreicht werden.

Der Behälter wird anschließend auf eine externe Induktionsplatte 2 gestellt. Die Aktivierung erzeugt ein aufsteigendes Magnetfeld, das ausschließlich mit der internen Metallplatte 7 aus ferritischem Edelstahl interagiert.

### Phase 2 - Erwärmung und Wärmeverteilung

Die Metallplatte 7, aufgesetzt auf einen zentralen Bolzen 15 und stabilisiert durch die obere Kappe 13ist für vertikale Bewegungen und leichte Rotationen ausgelegt, ermöglicht durch das schwimmende Lagerungssystem.

Das Magnetfeld induziert die Erwärmung der Metallplatte 7, die Temperaturen über 250 °C erreicht. Die Wärme wird durch Leitung an das darüberliegende Wasser übertragen, das rasch zu kochen beginnt.

Die untere Kavität 11 zwischen der Metallplatte 7 und dem Behälterboden 4 gelegen, nimmt einen Teil des Wassers auf, das durch den konstruktiven Spalt 16 zwischen der Metallplatte 7 und der Seitenwand 5 abfließt. Dieser Spalt 16 sollte auf maximal 2mm begrenzt sein und dient der thermischen Pufferung und Systemstabilisierung.

Phase 3 - Dynamische Interaktion zwischen Platte, Wasser und Pasta Während der Kochphase übernimmt die untere Kavität 11 eine zentrale Rolle. Das enthaltene Wasser erzeugt einen hydraulischen Auftrieb, der die Metallplatte 7 entlang der Bolzenachse anhebt. Die obere Kappe 13 begrenzt die vertikale Bewegung, während das Magnetfeld Vibrationen induziert, die Mikrorotationen der Platte erzeugen.

Diese Kombination aus vertikalen Impulsen und Rotationsbewegungen simuliert ein natürliches Rühren, verbessert die Wärmeverteilung und verhindert das Anhaften der Pasta an der Heizfläche. Der Wärmefluss wird durch aufsteigende Wellenpfeile dargestellt, die die gleichmäßige Energieübertragung von der Platte zum Wasser und zur Pasta anzeigen.

### Phase 4 - Wasseraufnahme und Endphase der Garung

Mit fortschreitender Wasseraufnahme durch die Pasta nimmt die Flüssigkeitsmenge auf der Plattenoberfläche ab. In dieser kritischen Phase verbleibt eine geringe Restmenge in der unteren Kavität 11, die für die thermische Stabilität und den Schutz des Behälters vor Überhitzung entscheidend ist. Der funktionale Abstand von 2mm zwischen der Metallplatte 7 und der Seitenwand 4 bleibt aktiv und verhindert direkten Kontakt mit empfindlichen Behälterflächen sowie das Eindringen von Pasta in die Kavität 11.

### Phase 5 - Abschluss des Kochzyklus

Am Ende des Prozesses ist die Pasta gleichmäßig gegart, ohne Anbrennen oder Verkleben. Das Modul kann deaktiviert oder in den Warmhaltemodus versetzt werden. Der Behälter ist servierbereit und kann nachhaltig entsorgt werden.

## Patentansprüche

1. Kochgeschirr (1) für ein Induktionskochfeld (2) mit einem napfartigen Schüsselkörper (3) aus einem induktiv nicht erwärmbaren Material,
der einen Boden (4) und zumindest eine Seitenwand (5) zur Begrenzung eines Garraums (6) aufweist, und mit einem Einsatzteil (7) aus einem induktiv erwärmbaren Material,
wobei das Einsatzteil (7) mit einem Abstand (a) oberhalb des Bodens (4) innerhalb des Garraumes (6) angeordnet ist,
wobei zwischen dem Boden (4) und dem Einsatzteil (7) ein Aufnahmeraum (11) zur Aufnahme einer Flüssigkeit ausgebildet ist,
wobei das Einsatzteil (7) mittels einer Befestigungseinrichtung (9) so an dem Schüsselkörper (3) gehalten ist, dass das Einsatzteil (7) relativ zum Schüsselkörper (3) beweglich ist,
wobei die Befestigungseinrichtung (9) ein Führungsteil (12) aufweist, das das Einsatzteil (7) mit Spiel durchdringt und so ausgestaltet ist, dass eine Bewegung des Einsatzteils (7) längs des Führungsteils (12) ermöglicht ist.

2. Kochgeschirr (1) nach Anspruch 1, **dadurch gekennzeichnet, dass** das Einsatzteil (7) mittels der Befestigungseinrichtung (9) mit dem Boden (4) verbunden ist.

3. Kochgeschirr (1) nach Anspruch 1 oder 2, **dadurch gekennzeichnet, dass** sich das Führungsteil (12) senkrecht zum Boden (4) des Schüsselkörpers (3) erstreckt.

4. Kochgeschirr (1) nach einem der vorstehenden Ansprüche, **dadurch gekennzeichnet, dass** die Befestigungseinrichtung (9) im Mittelpunkt des Bodens (4) und/oder des Einsatzteils (7) angeordnet ist.

5. Kochgeschirr (1) nach einem der vorstehenden Ansprüche, **dadurch gekennzeichnet, dass** das Führungsteil (12) als Bolzen ausgestaltet ist.

6. Kochgeschirr (1) nach einem der vorstehenden Ansprüche, **dadurch gekennzeichnet, dass** die Befestigungseinrichtung (9) ein Basisteil (14) aufweist, das am Boden (4) befestigt ist und das das Führungsteil (12) trägt.

7. Kochgeschirr (1) nach einem der vorstehenden Ansprüche, **dadurch gekennzeichnet, dass** das Führungsteil (12) an seinem dem Boden (4) abgewandten Ende eine Kappe (13) trägt, die so dimensioniert ist, dass sie eine Abnahme des Einsatzteils (7) von dem Führungsteil (12) verhindert.

8. Kochgeschirr (1) nach einem der vorstehenden Ansprüche, **dadurch gekennzeichnet, dass** zwischen dem Führungsteil (12) und dem Einsatzteil (7) ein Ringspalt (18) gebildet ist.

9. Kochgeschirr (1) nach einem der vorstehenden Ansprüche, **dadurch gekennzeichnet, dass** der Abstand (a) des Einsatzteils (7) von dem Boden (4) im Bereich von 1 mm bis 20 mm und insbesondere im Bereich von 5 mm und 15 mm liegt.

10. Kochgeschirr (1) nach einem der vorstehenden Ansprüche, **dadurch gekennzeichnet, dass** die Befestigungseinrichtung (9) aus Gummi oder Kunststoff, insbesondere aus Silikon oder einem weich-elastischen Polymer besteht.

11. Kochgeschirr (1) nach einem der vorstehenden Ansprüche, **dadurch gekennzeichnet, dass** zwischen dem Einsatzteil (7) und der Seitenwand (5) des Schüsselkörpers (3) ein Spalt (16) mit einer Breite (b) gebildet ist, wobei 1 mm ≤ b ≤ 10mm.

12. Kochgeschirr (1) nach einem der Ansprüche 1 bis 9, **dadurch gekennzeichnet, dass** das Einsatzteil (7) eine Platte oder ein Blech ist.

13. Kochgeschirr (1) nach einem der Ansprüche 1 bis 10, **dadurch gekennzeichnet, dass** das Einsatzteil (7) aus ferritischem Edelstahl besteht.

14. Kochgeschirr (1) nach einem der Ansprüche 1 bis 11, **dadurch gekennzeichnet, dass** der Schüsselkörper (3) aus Kunststoff, insbesondere Polypropylen und/oder aus Zellulose, insbesondere Kraftkarton und/oder aus einem nicht-ferromagnetischen Material besteht.

15. Set zur Umrüstung eines Schüsselkörpers (3) aus einem induktiv nicht erwärmbaren Material zu einem Kochgeschirr (1) für ein Induktionskochfeld (2) gemäß einem der Ansprüche 1 bis 14, wobei das Set aufweist:
ein Einsatzteil (7) aus einem induktiv erwärmbaren Material und eine Befestigungseinrichtung (9) zur Anbringung des Einsatzteils (7) am Schüsselkörper (3).
